# EUROPÄISCHE PATENTSCHRIFT

(11) **EP 2 676 059 B1**
(45) Veröffentlichungstag und Bekanntmachung des Hinweises auf die Patenterteilung: **07.01.2015**
(21) Anmeldenummer: 12704248.9
(22) Anmeldetag: 06.02.2012
(51) Int. Cl.: F16K 25/00, F16K 3/02

(54) **BEFESTIGUNG VON GEPANZERTEN ARMATUREN-DICHTUNGSRINGEN**
ATTACHEMENT OF REINFORCED SEALING RINGS TO VALVES
FIXATION D'ANNEAU D'ÉTANCHÉITÉ POUR VANNES

(30) Priorität: 18.02.2011 DE 102011011765
(43) Veröffentlichungstag der Anmeldung: 25.12.2013
(73) Patentinhaber: KSB Aktiengesellschaft, 67227 Frankenthal (DE)
(72) Erfinder: KRAUS, Peter, 31234 Edemissen (DE); RICHTER, Helmut, 28259 Bremen (DE)
(86) Internationale Anmeldenummer: PCT/EP2012/051960
(87) Internationale Veröffentlichungsnummer: WO 2012/110349

(56) Entgegenhaltungen:
- WO-A1-99/03132
- DE-B- 1 174 124
- GB-A- 2 315 841
- US-A1- 2009 121 173

## Beschreibung

Die Erfindung betrifft eine Armatur und ein Verfahren zur Befestigung von gepanzerten Armaturen-Dichtungsringen mittels Löten.

Durch die DE 1 174 124 A1 ist ein Absperrschieber bekannt, dessen gepanzerte rohrförmige Dichtungsringe in Vertiefungen des Gehäuses geführt und darin eingelötet sind. Ein zu montierender Dichtungsring weist eine 3-lagige Gestaltung auf, indem auf seiner dem Schieber zugekehrten Dichtseite eine Panzerung und auf seiner dem Gehäuse zugekehrten Seite eine Hartlotschicht angebracht ist. Die zur Aufnahme des Dichtungsringes bestimmten Vertiefungen des Schiebergehäuses sind mit zusätzlichen Eindrehungen versehen. Darin fließt ein Lötgut-Überfluss ab, welcher sich bildet, wenn zwischen die zu verlötenden Flächen eingelegtes Lötgut während der Löterhitzung beim Anpressen des Dichtungsringes austritt. Der Dichtungsring wird mit der Hartlotschicht in die Vertiefung eingebracht und die Verbindungsstelle in ihrer Umgebung mittels eines Schweißbrenners auf die Schmelztemperatur des Hartlotes erwärmt. Sodann wird der Dichtungsring in die Vertiefung eingepresst, so dass sich zwischen Dichtungsring und dem Grund der Vertiefung eine beide Teile verbindende Hartlotschicht von etwa 0,1 bis 0,3 mm Stärke ergibt. Innerhalb der Vertiefung sind zur Aufnahme von überflüssigem und heraus gequetschtem Lötgut spezielle Eindrehungen vorgesehen.

Diese Verbindung erfordert eine aufwändige und komplexe Gehäusebearbeitung, um die eigentliche Vertiefung zur Aufnahme und Führung des rohrförmigen Dichtungsringes sowie der zusätzlichen, innerhalb der Vertiefung befindlichen Eindrehung zur Aufnahme von überflüssigem Lötgut zu erhalten. Nachteilig für die Festigkeit der Lötverbindung ist die im Bereich der zusätzlichen Eindrehung sich ausbildende, dickere Lötgutschicht. Schwierig ist diese Lösung im Reparaturfall von in Rohrleitungen eingeschweißt verbleibenden großen Schiebern. Der Ausbau von solchen versenkt angeordneten, rohrförmigen Dichtungsringen sowie eine anschließende Bearbeitung der Vertiefungen zur Aufnahme neuer Dichtungsringe ist sehr aufwändig.

Der Erfindung liegt die Aufgabe zu Grunde, sowohl für herzustellende und/oder für vorhandene Armaturen mit im metallischen Gehäuse befestigten Dichtungsringen eine Fertigungsvereinfachung zu erreichen, welche in einem Reparatur- oder Revisionsfall bei schneller Austauschbarkeit eine zuverlässige Erneuerung des oder der Dichtungsringe ermöglicht.

Die Lösung dieser Erfindung sieht vor, dass der Dichtungsring als ein Hartmetallring , insbesondere als ein einteiliger Hartmetallring, mit einer zulässigen Druckspannung von mindestens 100 N/mm² ausgebildet ist, dessen mit einem Trägermaterial beschichtete Rückseite auf einer ebenen, keine Hinterschneidungen aufweisenden Aufnahmefläche stoffschlüssig befestigt ist. Bei der Herstellung eines solchen Gehäuses ist in einfachster Weise eine flächige Auflagefläche im Gehäuse erzeugbar, an der der Dichtungsring stoffschlüssig zu befestigen ist. Mittels einer einfachen Halterung wird er in der Einbaulage gehalten und durch Wärmeeintrag stoffschlüssig befestigt. Ebenso kann bei bereits eingebauten Gehäusen, deren Dichtungsringe verschlissen sind und erneuert werden müssen, der alte Dichtungsring aus dem Gehäuse entfernt werden. Durch einfache spanabhebende Bearbeitung wird die alte Befestigungsfläche zur stoffschlüssigen Aufnahme des neuen Dichtungsringes vorbereitet.

Durch die Ausbildung des Dichtungsringes als ein Hartmetallring wird auf die Herstellung einer zusätzlichen Panzerung verzichtet. Der Ring selbst bildet in seiner Ganzheit die Panzerung. Er wird mit seiner mit einem Trägermaterial beschichteten Rückseite auf der direkt zugänglichen Gehäusefläche unter Temperatureinfluss befestigt. Diese Lösung hat die Vorteile, dass mit einem Minimum an Bearbeitungsaufwand und Materialeinsatz auf einer leicht zu erstellenden, ebenen Befestigungsfläche eine Dichtungspanzerung unmittelbar möglich ist.

Eine Ausgestaltung sieht vor, dass das Trägermaterial aus einem Trägerwerkstoff mit einem Schmelzpunkt im Bereich von 900°C und einer Dauereinsatztemperatur bis 400°C besteht. Dies hat den Vorteil eines breiten Einsatzgebietes.

Eine weitere Ausgestaltung der Erfindung sieht vor, dass ein Flussmittel auf dem Trägerwerkstoff angebracht ist. Dazu kann der Trägerwerkstoff mit einem Flussmittel versehen und/oder damit beschichtet werden. Ebenso kann als ein eigenes Bauelement das Flussmittel auf einem Träger, beispielsweise auf einer Folie angeordnet sein, und wird erst vor einem Verbindungsvorgang am Gehäuse und/oder am Dichtungsring angebracht. Je nach Ausbildung des Dichtungsringes ist der Trägerwerkstoff mit einem Flussmittel versehen und/oder damit beschichtet. Eine direkte Beschichtung ab Werk gewährleistet eine gleichbleibende Qualität sowohl bei einer werksseitigen Montage als auch bei einem Reparaturfall auf einer Baustelle oder bei einer Revision einer eingebauten Armatur. Eine Ausbildung des Flussmittels als ein eigenes Bauelement stellt für die Monteure eine gleichbleibende Qualität und Quantität sicher.

Zur Gewährleistung der Material-/Montagequalität erfolgt nach einer weiteren Ausgestaltung die stoffschlüssige Befestigung des Dichtungsrings bei mindestens 900°C und unter Schutzgas. Dies vermeidet während der Montage negative Einflüsse auf die Verbindung von Trägermaterial und Gehäusematerial.

Weitere Ausgestaltungen sehen vor, dass der zu befestigende Hartmetallring absperrseitig eine fertig bearbeitete Dichtungsfläche aufweist oder dass am befestigten Hartmetallring absperrseitig eine Fertigbearbeitung der Dichtungsfläche im eingebauten Zustand erfolgt. Dies ist abhängig von einem jeweils Anwendung findenden Montageablauf, wobei unter den reproduzierbaren Montagebedingungen im Herstellerwerk die fertig bearbeitete Lösung von Vorteil ist. Bei einem Dichtungsringaustausch außerhalb des Werkes oder auf einer Baustelle bietet eine abschließende Fertigbearbeitung der Dichtungsfläche im eingebauten Zustand den Vorteil der Entfernung von eventuellen auf die Dichtungsfläche gelangtem Trägermaterial und/oder Flussmittel.

Die Anlageflächen für einen Dichtungsring sind in einfacher Weise vom Gehäusehals einer Armatur her bearbeitbar. Ebenso kann ein darauf zu befestigender Dichtungsring in einfachster Weise positioniert zur Anlage gebracht werden. Mit Hilfe eines gesteuerten Wärmeeintrages verflüchtigt sich ein Flussmittel, so dass eine kräfteübertragende Verbindung zwischen dem die Panzerung bildenden Hartmetallring und dem Grundwerkstoff des Gehäuses erfolgt.

Durch den völligen Verzicht auf im Gehäuse anzubringende Vertiefungen oder Aufnahmenuten zwecks Halterung und Anordnung der Dichtungsringe wird der Bearbeitungsprozess vereinfacht und der Befestigungsprozess sicherer. Eine zu bearbeitende Fläche ist unmittelbar sicht- und kontrollierbar und kann daher wesentlich einfacher bei automatisierten Fertigungsprozessen Anwendung finden. Ebenso ist durch die präzisere Trägermaterial Vergabe am Hartmetallring oder an der Gehäuse-Gegenfläche eine zuverlässigere Verbindung gewährleistet. Und die Ausbildung des Dichtungsringes als ein reiner Hartmetallring reduziert den notwendigen Einsatz von Rohstoffen.

Ein Ausführungsbeispiel der Erfindung ist in Figuren dargestellt. Es zeigen:
- Fig. 1: eine perspektivische Ansicht in ein aufgeschnittenes Schiebergehäuse, die
- Fig. 2: eine perspektivische Ansicht, die
- Fig. 3: einen Querschnitt durch einen Dichtungsring und die
- Fig. 4: einen montierten Dichtungsring.

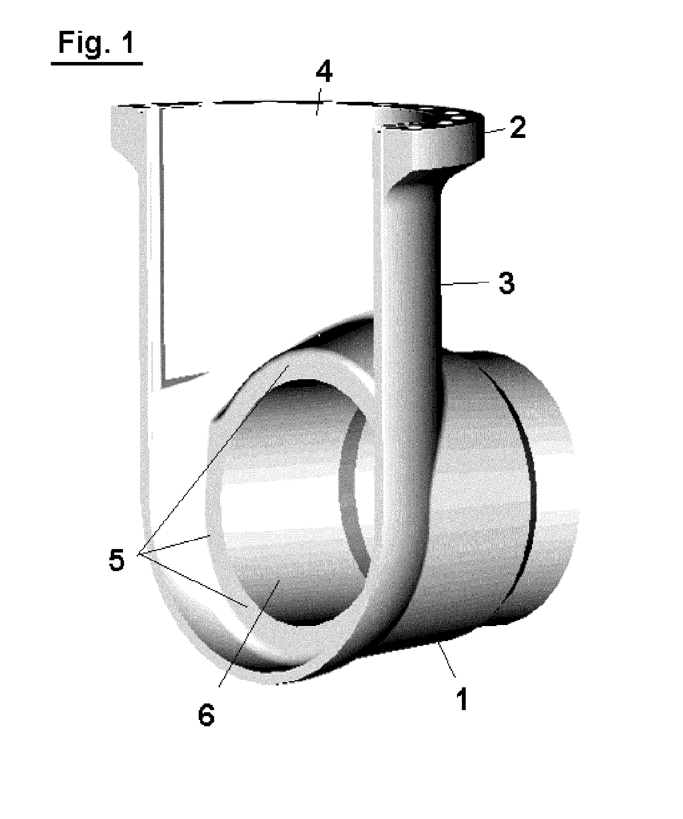

Die Fig. 1 zeigt ein Armaturengehäuse 1, hier in Form eines Absperrschiebers, in einer aufgeschnittenen Darstellung. Am Flansch 2 eines Gehäusehalses 3 ist im Betrieb ein Deckel befestigt, der eine Öffnung 4 des Gehäusehalses 3 verschließt und die Funktion von Führung und Halterung eines - hier nicht dargestellten - Verschlussorgans, im konkreten Fall eines Absperrschiebers, übernimmt. Durch die Öffnung 4 des Gehäusehalses 3 und/oder durch eine Durchströmöffnung 6 erfolgt in einfacher Weise eine präzise Bearbeitung einer Aufnahmefläche 5 für einen - hier nicht dargestellten - Dichtungsring. Die Qualität und Abmessung einer solchen Aufnahmefläche 5 ist mit einfachen Mitteln kontrollierbar.

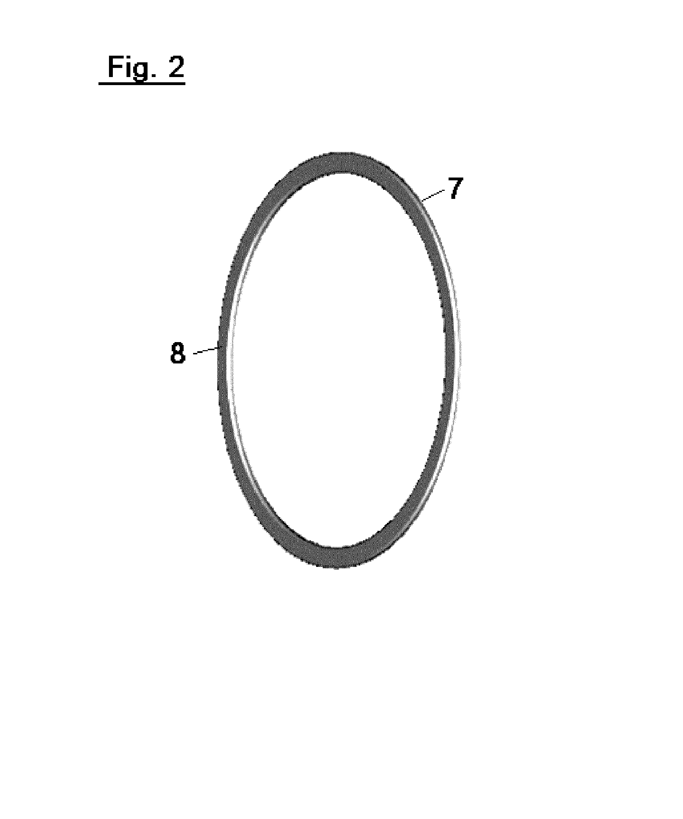

Fig. 2 zeigt eine perspektivische Ansicht eines Dichtungsringes 7, der vollständig aus einem Panzerungsmaterial in Form von Hartmetall, wie z. B. Stellit H6, Stellit 21, Colmonoy 4, Colmonoy 45, Hastelloy CA, Niborit 35, Everit 50, Antinit DUR 300, 1.4115, 1.4370 u. a. besteht. Dessen Dichtungsfläche 8, die dichtend mit einem daran anliegenden Absperrorgan korrespondiert, kann bereits fertig bearbeitet sein. Auf der anderen Seite des Ringes, der Rückseite, ist in vorteilhafter Weise bereits ein Trägermaterial haftend aufgetragen. Unter Zuhilfenahme eines Flussmittels kann dieser Dichtungsring 7 in an sich bekannter Weise unter dem Einfluss von Wärme an der Aufnahmefläche 5 des Gehäuses 1 befestigt werden. Bei der Verbindung vom Dichtungsring 7 mit dem Gehäuse 1 kann das Flussmittel in einfachster Weise auf der Ringrückseite und/oder der Gehäuseanlagefläche 5 manuell und/oder automatisch aufgetragen werden. Hierzu sind auch entsprechend vorbereitete, eigenständige Flussmittelelemente denkbar, deren Abmessungen den Abmessungen eines zu befestigenden Dichtungsringes entsprechen.

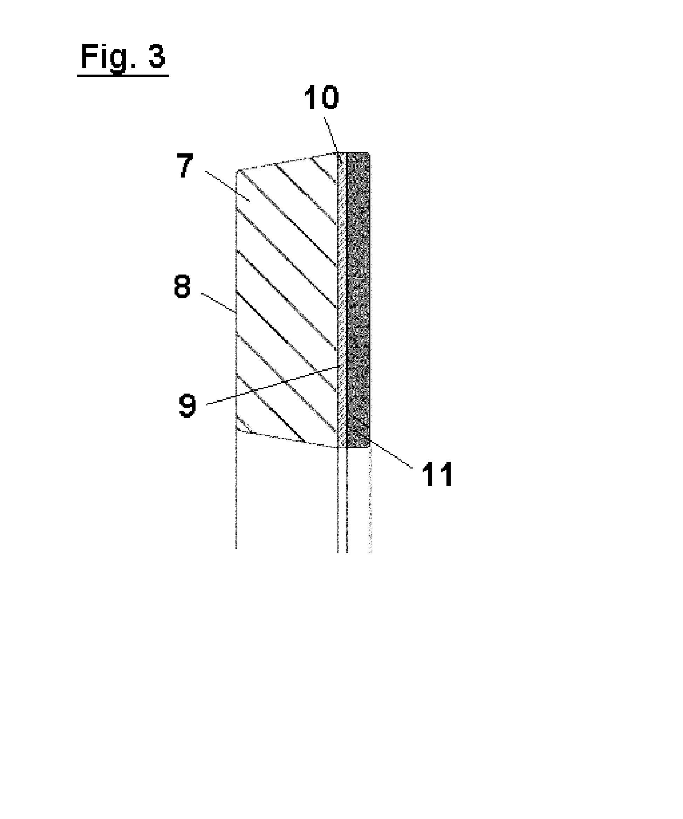

Fig. 3 zeigt eine besonders vorteilhafte Ausbildungsform des Dichtungsringes im Querschnitt. Er besteht vollständig aus Hartmetall und kann mit einer vorbereiteten oder fertig bearbeiteten Dichtungsfläche versehen sein, dies ist abhängig von den Verarbeitungsbedingungen. Bei den besseren Fertigungsbedingungen in einem Herstellerwerk bietet sich die Verwendung von fertig bearbeiteten Dichtungsringen an. Dagegen kann für den Einsatz außerhalb eines Werkes, beispielsweise bei einer in ein Rohrleitungssystem eingebauten Armatur, ein vorbereiteter Dichtungsring von Vorteil sein. Nach dessen unter häufig raueren Bedingungen erfolgenden Montage genügt ein einfaches Überschleifen oder Läppen, um in Verbindung mit einem daran anliegenden Absperrorgan eine die notwendige Dichtwirkung zu erlangen.

Auf der Rückseite 9 oder Befestigungsfläche 9 des Dichtungsringes 7 ist ein Trägermaterial 10 angeordnet, welches fest mit dem Ring 7 verbunden ist. Auf dem Trägermaterial liegt zusätzlich eine feste Beschichtung in Form eines Flussmittels 11 auf. Ein derartiger Dichtungsring kann in einfachster Weise maschinell erstellt bevorratet werden und ist zuverlässig sowie sicher als eine Einheit transportierbar. Für eine spätere Montage benötigt ein Monteur nur noch eine solche Dichtungseinheit, die am Montageort in der Montageposition unverrückbar gehalten wird. Dabei liegt das Flussmittel 11 an der Aufnahmefläche 5 an. Durch Wärme verbindet das Trägermaterial den Dichtungsring 7 mit der Aufnahmefläche 5 des Armaturengehäuses. Der Wärmeeintrag kann in einfachster Weise durch Induktionsmittel erfolgen, es sind aber auch andere herkömmliche Techniken durch Schweißbrenner und dergleichen möglich.

Alternativ kann das Flussmittel auf einem separaten Träger, beispielsweise auf einer Folie oder einem Ring angeordnet sein, um erst unmittelbar vor einem Verbindungsvorgang am Gehäuse und/oder am Dichtungsring angebracht zu werden. Das Flussmittel dient zur Verbesserung der stoffschlüssigen Verbindung.

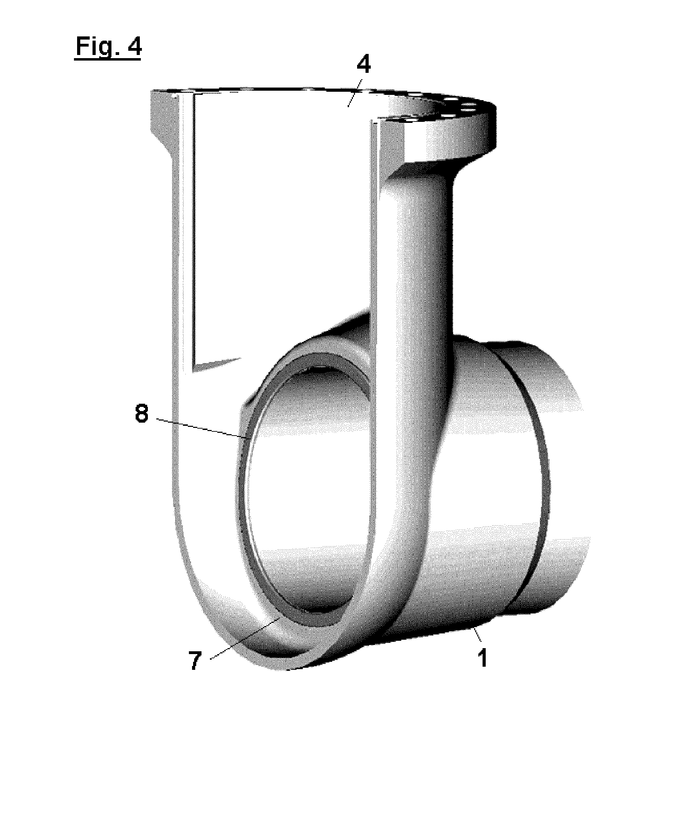

Fig. 4 zeigt eine Ansicht entsprechend der Fig. 1, jedoch mit bereits befestigten Dichtungsring 7. Diese Lösung hat den entscheidenden Vorteil, dass damit bei Revisionsarbeiten auch problemlos ein Austausch an installierten, beispielsweise eingeschweißten Kraftwerksarmaturen, möglich ist. Ein verschlissener Dichtungsring 7 kann in einfacher Weise durch Wärmeeintrag gelöst werden. An die Aufnahmefläche 5 wird der industriell oder werksseitig vorbereitete Dichtungsring angelegt und durch Wärmeeintrag befestigt. Derartige Dichtungsringe 7 gewährleisten sowohl bei der Herstellung in einem Werk als auch bei einem Austausch in einem Kraftwerk einen gleichbleibend hohen Qualitäts- und Fügestandard. Die Betriebsdauer einer derartig hergestellten Armatur kann für lange Zeit garantiert werden.

## Patentansprüche

1. Armaturengehäuse (1), insbesondere Schiebergehäuse, mit mindestens einem Dichtungsring (7), wobei der Dichtungsring (7) absperrseitig eine Panzerung aufweist und rückseitig, auf seiner einem metallischen Gehäuse (1) zugekehrten Befestigungsseite mit einer Hartlotschicht versehen und damit in das Gehäuse (1) eingelötet ist,
**dadurch gekennzeichnet, dass**
der Dichtungsring (7) als ein Hartmetallring mit einer zulässigen Druckspannung von mindestens 100 N/mm² ausgebildet ist, dessen mit einem Trägermaterial (10) beschichtete Rückseite (9) auf einer ebenen, keine Hinterschneidungen aufweisende Aufnahmefläche (5) stoffschlüssig befestigt ist.

2. Armaturengehäuse nach Anspruch 1, **dadurch gekennzeichnet, dass** das Trägermaterial (10) aus einem Trägerwerkstoff mit einem Schmelzpunkt im Bereich von 900 °C und einer Dauereinsatztemperatur bis max. 400 °C besteht.

3. Armaturengehäuse nach Anspruch 2, **dadurch gekennzeichnet, dass** der Trägerwerkstoff mit einem Flussmittel (11) versehen und/oder damit beschichtet ist.

4. Armaturengehäuse nach Anspruch 1, 2 oder 3, **dadurch gekennzeichnet, dass** die stoffschlüssige Befestigung des Dichtungsring (7) bei mindestens 900° C und unter Schutzgas erfolgt.

5. Armaturengehäuse nach einem der Ansprüche 1 bis 4, **dadurch gekennzeichnet, dass** der zu befestigende Hartmetallring absperrseitig eine fertig bearbeitete Dichtungsfläche (8) aufweist.

6. Armaturengehäuse nach einem der Ansprüche 1 bis 4, **dadurch gekennzeichnet, dass** im eingebauten Zustand am befestigten Hartmetallring absperrseitig eine Fertigbearbeitung der Dichtungsfläche (8) erfolgt.

7. Verfahren zur Löt-Befestigung von gepanzerten Dichtungsringen in Armaturengehäusen, nach einem oder mehreren der Ansprüche 1 bis 6, **dadurch gekennzeichnet, dass** auf einen aus Hartmetall bestehenden Dichtungsring (7) auf dessen rückseitigen Befestigungsseite eine Beschichtung aus einem unter Temperatureinfluss schmelzfähigen Trägerwerkstoff (10) anbringbar ist, dass der Trägerwerkstoff (10) und/oder ein Montageort mit einem Flussmittel (11) versehen wird, dass der Dichtungsring (7) auf eine eben ausgebildete, hinterschneidungsfreie Aufnahmefläche (5) eines Armaturengehäuses (1) montagesicher aufgelegt ist, und dass durch einen temporären Temperatureinfluss das Flussmittel (11) entfernt und der Trägerwerkstoff (10) eine feste Verbindung mit dem Armaturengehäuse (1) eingeht.

8. Verfahren nach Anspruch 7, **dadurch gekennzeichnet, dass** an einem mit dem Gehäuse (1) verbundenen Dichtungsring (7) eine Endbearbeitung der Dichtungsfläche (8) für eine dichtende Anlage an einem Absperrorgan erfolgt.

9. Verfahren nach Anspruch 7 oder 8, insbesondere bei Schiebern, wobei ein gepanzerter Dichtungsring (7) auf seiner dem Gehäuse (1) zugekehrten Befestigungsseite mit einer Hartlotschicht versehen wird und mittels Wärmeeintrag ins Gehäuse (1) einlötbar ist.

## Claims

1. Valve housing (1), in particular slide housing, having at least one washer (7), wherein the washer (7) has armouring on the shut-off side and, on the rear side, on its attachment side facing a metal housing (1), is provided with a hard solder layer and is thus soldered into the housing (1),
**characterized in that**
the washer (7) is formed as a hard metal ring having a permissible compressive stress of at least 100 N/mm², whose rear side (9) coated with a carrier material (10) is attached in material-bonded fashion to a planar mounting surface (5) having no undercuts.

2. Valve housing according to Claim 1, **characterized in that** the carrier material (10) consists of a carrier material having a melting point in the region of 900°C and a long-term operating temperature of up to 400°C.

3. Valve housing according to Claim 2, **characterized in that** the carrier material is provided and/or coated with a flux (11).

4. Valve housing according to Claim 1, 2 or 3, **characterized in that** the material-bonded attachment of the washer (7) is effected at at least 900°C and under a shield gas.

5. Valve housing according to one of Claims 1 to 4, **characterized in that** the hard metal ring to be attached has, on the shut-off side, a finished seal surface (8).

6. Valve housing according to one of Claims 1 to 4, **characterized in that**, in the installed state, a finishing operation is carried out on the seal surface (8) on the shut-off side of the attached hard metal ring.

7. Method for the attachment by soldering of armoured washers in valve housings, according to one or more of Claims 1 to 6, **characterized in that** a coating of a carrier material (10), which is meltable under the influence of temperature, can be applied to the rear attachment side of a washer (7) made of hard metal, **in that** the carrier material (10) and/or an assembly location is/are provided with a flux (11), **in that** the washer (7) is placed securely for assembly on a planar mounting surface (5), having no undercuts, of a valve housing (1), and **in that** by means of a temporary influence of temperature the flux (11) is removed and the carrier material (10) enters into a solid connection with the valve housing (1).

8. Method according to Claim 7, **characterized in that** a finishing operation is carried out on the seal surface (8) of a washer (7) connected to the housing (1) such that it bears in a sealing manner against a shut-off member.

9. Method according to Claim 7 or 8, in particular in the case of slides, wherein an armoured washer (7) is provided with a hard solder layer on its attachment side facing the housing (1) and can be soldered into the housing (1) by means of introduction of heat.

## Revendications

1. Corps d'armature (1), en particulier corps de vanne, avec au moins un anneau d'étanchéité (7), dans lequel l'anneau d'étanchéité (7) présente un blindage du côté d'arrêt et est muni du côté arrière, sur son côté de fixation tourné vers un corps métallique (1), d'une couche de brasage dur et est brasé avec celle-ci dans le corps (1),
**caractérisé en ce que** l'anneau d'étanchéité (7) est réalisé sous la forme d'un anneau en métal dur avec une contrainte de compression admissible d'au moins 100 N/mm², dont le côté arrière (9) revêtu d'une matière de support (10) est fixé en continuité de matière sur une face d'appui (5) ne présentant pas de contre-dépouilles.

2. Corps d'armature selon la revendication 1, **caractérisé en ce que** la matière de support (10) se compose d'un matériau de support présentant un point de fusion de l'ordre de 900°C et une température d'utilisation permanente de 400°C maximum.

3. Corps d'armature selon la revendication 2, **caractérisé en ce que** le matériau de support est muni d'un fondant (11) et/ou est revêtu de celui-ci.

4. Corps d'armature selon la revendication 1, 2 ou 3, **caractérisé en ce que** la fixation en continuité de matière de l'anneau d'étanchéité (7) est effectuée à au moins 900°C et sous gaz protecteur.

5. Corps d'armature selon l'une quelconque des revendications 1 à 4, **caractérisé en ce que** l'anneau de métal dur à fixer présente du côté d'arrêt une face d'étanchéité totalement usinée (8).

6. Corps d'armature selon l'une quelconque des revendications 1 à 4, **caractérisé en ce qu'**un usinage final de la face d'étanchéité (8) est effectué à l'état monté, du côté d'arrêt, sur l'anneau de métal dur fixé.

7. Procédé de fixation par brasage d'anneaux d'étanchéité blindés dans des corps d'armatures, selon une ou plusieurs des revendications 1 à 6, **caractérisé en ce qu'**un revêtement en un matériau de support (10) fondant sous l'influence de la température peut être déposé sur un anneau d'étanchéité composé de métal dur (7), sur le côté de fixation arrière de celui-ci, **en ce que** le matériau de support (10) et/ou un site de montage est muni d'un fondant (11), **en ce que** l'anneau d'étanchéité (7) est posé sur une face d'appui (5) à montage sûr d'un corps d'armature (1), réalisée sous forme plane et libre de contre-dépouilles, et **en ce que** le fondant (11) est éliminé par une influence temporaire de la température et le matériau de support (10) forme une liaison solide avec le corps d'armature (1).

8. Procédé selon la revendication 7, **caractérisé en ce que** l'on effectue un usinage final de la face d'étanchéité (8) sur un anneau d'étanchéité (7) assemblé au corps (1) en vue d'un appui étanche sur un organe d'arrêt.

9. Procédé selon la revendication 7 ou 8, en particulier dans des vannes, dans lequel un anneau d'étanchéité blindé (7) est muni sur son côté de fixation tourné vers le corps (1) d'une couche de brasage dur et peut être brasé dans le corps (1) au moyen d'un apport de chaleur.
